(19) Europäisches Patentamt
European Patent Office
Office européen des brevets

(11) EP 3 578 607 B1

(12) EUROPEAN PATENT SPECIFICATION

(45) Date of publication and mention of the grant of the patent:
**27.04.2022 Bulletin 2022/17**

(21) Application number: **18747103.2**

(22) Date of filing: **01.02.2018**

(51) International Patent Classification (IPC):
***C08L 69/00*** *(2006.01)* ***C08K 5/1515*** *(2006.01)*
***C08K 5/526*** *(2006.01)* ***C08L 63/00*** *(2006.01)*
***C08L 71/02*** *(2006.01)* ***F21S 2/00*** *(2016.01)*

(52) Cooperative Patent Classification (CPC):
(C-Sets available)
**C08K 5/1515; C08K 5/526; C08L 63/00;**
**C08L 69/00; C08L 71/02; F21S 2/00** (Cont.)

(86) International application number:
**PCT/JP2018/003346**

(87) International publication number:
**WO 2018/143322 (09.08.2018 Gazette 2018/32)**

# (54) POLYCARBONATE RESIN COMPOSITION

POLYCARBONATHARZZUSAMMENSETZUNG

COMPOSITION DE RÉSINE DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2017 JP 2017016647**

(43) Date of publication of application:
**11.12.2019 Bulletin 2019/50**

(73) Proprietor: **Idemitsu Kosan Co.,Ltd.**
**Chiyoda-ku**
**Tokyo**
**100-8321 (JP)**

(72) Inventors:
- **TORII, Takahiro**
**Ichihara-shi**
**Chiba 299-0193 (JP)**
- **YAMAZAKI, Yasunobu**
**Ichihara-shi**
**Chiba 299-0193 (JP)**

(74) Representative: **Hoffmann Eitle**
**Patent- und Rechtsanwälte PartmbB**
**Arabellastraße 30**
**81925 München (DE)**

(56) References cited:
**WO-A1-2016/060220**
**WO-A1-2017/212512**
**JP-A- 2015 093 913**
**JP-A- 2016 121 205**
**JP-A- 2017 203 124**

EP 3 578 607 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 69/00**

## Description

TECHNICAL FIELD

The present invention relates to a polycarbonate resin composition.

BACKGROUND ART

An aromatic polycarbonate is excellent in, for example, transparency, mechanical properties, thermal properties, electrical properties, and weatherability, and has been used in an optical molded article, such as a light-guiding plate, a lens, or an optical fiber, through the utilization of its characteristics. However, the light transmittance of the polycarbonate serving as one of the indicators representing its transparency is lower than that of, for example, a polymethyl methacrylate (PMMA). Therefore, a surface light source body including a light-guiding plate made of the aromatic polycarbonate and a light source has a problem in that its luminance is low. Accordingly, the development of a method of improving a luminance and a light transmittance in the light-guiding plate made of the aromatic polycarbonate has been progressing.

In particular, a further thinning of the light-guiding plate has been advanced in recent years, and in order that the flowability of a resin composition may be improved to allow thin-wall molding, the composition is sometimes molded under a high-temperature condition exceeding 340°C. However, when a resin composition containing an aromatic polycarbonate is retained and molded under a high-temperature condition, there is a problem in that its yellowing is liable to occur, and by extension, its optical characteristics, such as a luminance and a light transmittance, are liable to reduce.

In PTL 1, in order to provide a polycarbonate resin composition for a light-guiding plate that is free from becoming opaque and being reduced in transmittance, and that has a satisfactory transmittance and a satisfactory hue, there is a disclosure of an aromatic polycarbonate resin composition for a light-guiding plate obtained by incorporating, into an aromatic polycarbonate resin, a polyoxyalkylene glycol containing a polyethylene glycol or a polypropylene glycol as a main component, or a fatty acid ester thereof.

However, in the method of PTL 1, the heat resistance of the polyoxyalkylene glycol to be used is low. Accordingly, when the composition is molded at a temperature exceeding 340°C or when a molding cycle lengthens, the yellowing of the composition may become more remarkable to adversely affect the optical performance of a molded article, such as a luminance and a light transmittance. Further, the decomposed gas of the polyoxyalkylene glycol may cause a silver streak on the surface of the molded article. Accordingly, in the method of PTL 1, an increase in temperature for an improvement in flowability is substantially limited, and hence the method has not been suitable for the molding of a thin-walled and large-area light-guiding plate. Further, a polycarbonate resin composition for an optical molded article, such as a light-guiding plate, needs to have long-term stability of its optical characteristics after its molding, but the method has not been sufficient in terms of the long-term stability.

It has also been known that a polyether compound and a phosphorus-based antioxidant are used in combination in a polycarbonate resin composition for an optical molded article for the purpose of, for example, suppressing the thermal deterioration of the composition at the time of high-temperature molding.

In, for example, PTL 2, there is a disclosure of a polycarbonate resin composition for a thin-walled optical part that contains predetermined amounts of a polycarbonate resin (A), a polyalkylene ether glycol having a number-average molecular weight of from 500 to 5,000 and having 3 to 6 carbon atoms, or an ester compound thereof (B), a phosphorus-based stabilizer (C), and an epoxy compound (D), that has a mass ratio between the component (C) and the component (D) in a predetermined range, and that has a satisfactory hue and is excellent in heat discoloration resistance. In Examples of PTL 2, a polytetramethylene ether glycol is used as the component (B). In PTL 3, there is a disclosure of a polycarbonate resin composition for a thin-walled optical part that contains predetermined amounts of a polycarbonate resin (A), a polytrimethylene glycol (B), and a phosphorus-based stabilizer (C), and that has a high transmittance and a satisfactory hue. In Examples of PTL 3, the polytrimethylene glycol is used as the component (B).

In PTL 4, there is a disclosure of an aromatic polycarbonate resin composition obtained by blending an aromatic polycarbonate resin (A) with 0.1 part by mass to 5 parts by mass of a predetermined polyoxytetramethylene-polyoxyethylene glycol (B), and there is a description that a phosphorus-based antioxidant is preferably added for preventing the thermal deterioration of the composition at the time of its molding.

In PTL 5, there are disclosures of a polycarbonate resin composition that contains predetermined amounts of a polycarbonate resin (A), a polyoxytetramethylene-polyoxypropylene glycol having a weight-average molecular weight of from 1,000 to 4,000 (B), and a predetermined phosphite-based compound (C), and that is excellent in light transmittance even when molded at high temperature, and an optical molded article thereof.

PTL 6 describes a polycarbonate resin composition containing an aromatic polycarbonate resin and specific amounts of a phosphorus-based compound having an aryl group and of a polyether compound having a polyoxyalkylene structure. This composition is suitable for an optical product and is characterized by a good heat stability in high temperature molding.

CITATION LIST

PATENT LITERATURE

PTL 1: JP 2004-51700 A
PTL 2: JP 2015-180709 A
PTL 3: JP 2016-125028 A
PTL 4: WO 2011/083635 A1
PTL 5: JP 5801516 B1
PTL 6: US 2017/0275422 A1

SUMMARY OF INVENTION

TECHNICAL PROBLEM

Regarding a phosphorus-based antioxidant, in Examples of PTLs 2 to 5, there are disclosures of, for example, bis(2,6-di-*tert*-butyl-4-methylphenyl)pentaerythritol diphosphite) (ADK STAB PEP-36), bis(2,4-dicumylphenyl)pentaerythritol diphosphite) (Doverphos S-9228PC), and 2,4,8,10-tetra-*tert*-butyl-6-[3-(3-methyl-4-hydroxy-5-*tert*-butylphenyl)propoxy]dibenzo[d,f][1 ,3,2]dioxaphosphepin (SUMILIZER GP). However, those phosphorus-based antioxidants each involve a problem in that its thermal decomposition is liable to occur.

When a phosphorus-based antioxidant in a polycarbonate resin composition is decomposed by heat at the time of the molding of the composition, the yellowing of the composition is liable to occur. In addition, when a molded article to be obtained after the molding undergoes thermal history, a change in color tone thereof is liable to occur, and hence the long-term stability of the optical characteristics thereof reduces. Accordingly, the molded article is unsuitable as an optical molded article. In addition, when the phosphorus-based antioxidant is decomposed, the antioxidant is turned into a compound having an acidic hydroxy group, such as phosphorous acid or phosphoric acid, and the compound may accelerate the decomposition of a polycarbonate resin to cause a reduction in strength of the resin due to a reduction in molecular weight thereof.

It has been found that, even in the case where each of the polycarbonate resin compositions containing the above-mentioned phosphorus-based antioxidants disclosed in Examples of PTLs 2 to 5 is used in combination with a polyether compound, when the composition is retained and molded at a temperature exceeding 340°C, its yellowing is liable to occur, and the long-term stability of its optical characteristics after the molding is low.

A problem to be solved by the present invention is to provide a polycarbonate resin composition having the following features and a molded article using the composition: even when the composition is retained in a molding machine at a high temperature exceeding 340°C, the composition shows little yellowing and hence maintains a satisfactory color tone; and even when a molded article obtained by molding the composition after the composition has been retained under a high-temperature condition undergoes thermal history, the molded article shows a small change in color tone with time and is hence excellent in long-term stability of its optical characteristics.

SOLUTION TO PROBLEM

The inventors of the present invention have made extensive investigations, and as a result, have found that the problem can be solved by blending a polycarbonate resin with a predetermined polyether compound, a predetermined antioxidant, and an epoxy compound.

ADVANTAGEOUS EFFECTS OF INVENTION

Even when the polycarbonate resin composition of the present invention is retained in a molding machine at a high temperature exceeding 340°C, an increase in YI value thereof is suppressed. Further, even when a molded article obtained by molding the resin composition after the resin composition has been retained at high temperature for a long time period undergoes thermal history, the molded article shows a small change in color tone with time and hence has satisfactory long-term stability of its optical characteristics. Therefore, the molded article including the resin composition is suitable as an optical molded article, in particular, a thin-walled light-guiding plate for a mobile terminal or an on-vehicle light-guiding plate for a car navigation system or the like.

DESCRIPTION OF EMBODIMENTS

A polycarbonate-based resin composition of the present invention is described in detail below. Herein, a specification considered to be preferred may be arbitrarily adopted, and a combination of preferred specifications can be said to be more preferred. In addition, the description "XX to YY" as used herein means "XX or more and YY or less."

[Polycarbonate Resin Composition]

A polycarbonate resin composition of the present invention comprises:

a polycarbonate resin (A);
a polyether compound (B) represented by the following formula (1):

$$R^{B3}O\text{-}(R^{B1}O)_m(R^{B2}O)_n\text{-}R^{B4} \qquad (1)$$

wherein $R^{B1}$ and $R^{B2}$ each represent an alkylene group having 2 to 6 carbon atoms, "m"+"n" represents 5 or more and less than 300, when "m" represents 2 or more, $R^{B1}$s may be identical to or different from each other, and when "n" represents 2 or more, $R^{B2}$s may be identical to or different from each other, provided that not all of $R^{B1}$ and $R^{B2}$ are identical to each other, and $R^{B3}$ and $R^{B4}$ each represent a hydrogen atom, a hydrocarbon group having 1 to 30 carbon atoms, an alkanoyl group having 1 to 30 carbon atoms, an alkenoyl group having 2 to 30 carbon atoms, or a glycidyl group, and $R^{B3}$ and $R^{B4}$ may be identical to or different from each other;
an antioxidant (C) represented by the following formula (2):

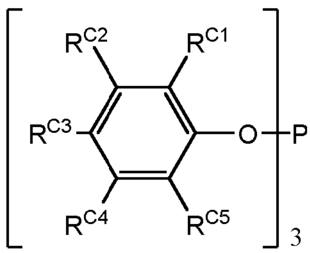

(2)

wherein

in the formula (2), $R^{C1}$ to $R^{C5}$ each independently represent a hydrogen atom, an alkyl group having 1 to 12 carbon atoms, or an aryl group having 6 to 14 carbon atoms, provided that not all of $R^{C1}$ to $R^{C5}$ represent hydrogen atoms; and an epoxy compound (D).

The inventors of the present invention have found that combined use of the predetermined polyether compound (B), the predetermined antioxidant (C), and the epoxy compound (D) in the polycarbonate resin composition achieves the following: even when the composition is retained in a molding machine at a high temperature exceeding 340°C, the remaining ratio of the antioxidant is high, and as a result, an increase in YI value of the composition is suppressed even at the time of its retention and molding at high temperature; and even when a molded article obtained by molding the resin composition after the resin composition has been retained at high temperature for a long time period undergoes thermal history, the molded article shows a small change in color tone with time, and hence has satisfactory long-term stability of its optical characteristics. That is, the components (B) to (D) in the polycarbonate resin composition can interact with each other to suppress the thermal deterioration of the composition at the time of its retention and molding at high temperature. Accordingly, the composition can be molded even under a high-temperature condition exceeding 340°C without the impairment of its optical characteristics, and a molded article that can maintain stable optical characteristics over a long time period is obtained.

Herein, the optical characteristics mainly mean a color tone, and a YI value is typically used in the evaluation of a color tone.

<Polycarbonate Resin (A)>

The polycarbonate resin (A) to be incorporated into the polycarbonate resin composition of the present invention is, for example, an aromatic polycarbonate resin. A resin produced by a known method may be used as the aromatic

polycarbonate resin without any particular limitation.

For example, a resin produced from a dihydric phenol and a carbonate precursor by a solution method (interfacial polycondensation method) or a melting method (ester exchange method), i.e., a resin produced by the interfacial polycondensation method involving causing the dihydric phenol and phosgene to react with each other in the presence of an end terminator, or by causing the dihydric phenol and diphenyl carbonate or the like to react with each other in the presence of the end terminator according to the ester exchange method or the like may be used.

Examples of the dihydric phenol may include various dihydric phenols, in particular, 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, a bis(4-hydroxyphenyl)cycloalkane, bis(4-hydroxyphenyl) oxide, bis(4-hydroxyphenyl) sulfide, bis(4-hydroxyphenyl) sulfone, bis(4-hydroxyphenyl) sulfoxide, and bis(4-hydroxyphenyl) ketone. In addition, examples thereof may also include hydroquinone, resorcin, and catechol. Those dihydric phenols may be used alone or in combination thereof. Among them, bis(hydroxyphenyl)alkane-based phenols are preferred, and bisphenol A is particularly suitable.

Examples of the carbonate precursor include a carbonyl halide, a carbonyl ester, and a haloformate. The carbonate precursor is specifically phosgene, a dihaloformate of a dihydric phenol, diphenyl carbonate, dimethyl carbonate, diethyl carbonate, or the like.

The polycarbonate resin (A) may have a branched structure. Examples of a branching agent used for introducing a branched structure into the polycarbonate resin (A) include 1,1,1-tris(4-hydroxyphenyl)ethane, $\alpha,\alpha',\alpha''$-tris(4-hydroxyphenyl)-1,3,5-triisopropylbenzene, phloroglucin, trimellitic acid, and 1,3-bis(*o*-cresol).

A monovalent carboxylic acid or a derivative thereof or a monohydric phenol may be used as the end terminator. Examples thereof may include p-tert-butylphenol, *p*-phenylphenol, *p*-cumylphenol, *p*-perfluorononylphenol, *p*-(perfluorononylphenyl)phenol, *p*-(perfluorohexylphenyl)phenol, *p-tert*-perfluorobutylphenol, 1-(*p*-hydroxybenzyl)perfluorodecane, *p*-[2-(1*H*,1*H*-perfluorotridodecyloxy)-1,1,1,3,3,3-hexafluoropropyl]phenol, 3,5-bis(perfluorohexyloxycarbonyl)phenol, perfluorododecyl *p*-hydroxybenzoate, *p*-(1*H*,1*H*-perfluorooctyloxy)phenol, 2*H*,2*H*,9*H*-perfluorononanoic acid, and 1,1,1,3,3,3-hexafluoro-2-propanol.

It is preferred that the polycarbonate resin (A) include a polycarbonate including, in a main chain thereof, a repeating unit represented by the following formula (I):

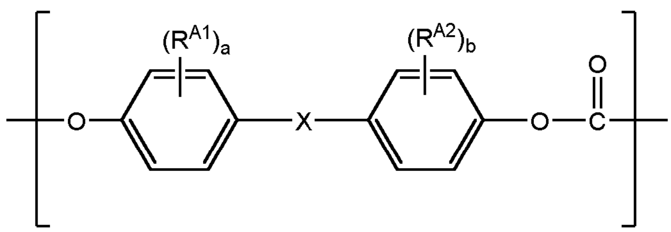

(I)

wherein $R^{A1}$ and $R^{A2}$ each independently represent an alkyl group or alkoxy group having 1 to 6 carbon atoms, and $R^{A1}$ and $R^{A2}$ may be identical to or different from each other, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, $-SO_2-$, -O-, or -CO-, and "a" and "b" each independently represent an integer of from 0 to 4, when a represents 2 or more, $R^{A1}$s may be identical to or different from each other, and when b represents 2 or more, $R^{A2}$s may be identical to or different from each other.

Examples of the alkyl group represented by each of $R^{A1}$ and $R^{A2}$ include a methyl group, an ethyl group, a n-propyl group, an isopropyl group, various butyl groups (the term "various" means that a linear group and various branched groups are included, and the same holds true for the following), various pentyl groups, and various hexyl groups. An example of the alkoxy group represented by each of $R^{A1}$ and $R^{A2}$ is an alkoxy group whose alkyl group moiety is the alkyl group described above.

$R^{A1}$ and $R^{A2}$ each preferably represent an alkyl group having 1 to 4 carbon atoms or an alkoxy group having 1 to 4 carbon atoms.

Examples of the alkylene group represented by X include a methylene group, an ethylene group, a trimethylene group, a tetramethylene group, and a hexamethylene group. Among them, an alkylene group having 1 to 5 carbon atoms is preferred. Examples of the alkylidene group represented by X include an ethylidene group and an isopropylidene group. Examples of the cycloalkylene group represented by X include a cyclopentanediyl group, a cyclohexanediyl group, and a cyclooctanediyl group. Among them, a cycloalkylene group having 5 to 10 carbon atoms is preferred. Examples of the cycloalkylidene group represented by X include a cyclohexylidene group, a 3,5,5-trimethylcyclohexylidene group, and a 2-adamantylidene group. Among them, a cycloalkylidene group having 5 to 10 carbon atoms is preferred, and a cycloalkylidene group having 5 to 8 carbon atoms is more preferred.

"a" and "b" each independently represent an integer of from 0 to 4, preferably from 0 to 2, more preferably 0 or 1.

In the present invention, the polycarbonate resin (A) preferably contains a polycarbonate resin having a bisphenol A structure from the viewpoints of, for example, the transparency, mechanical characteristics, and thermal characteristics of a molded article to be obtained. The polycarbonate resin having a bisphenol A structure is specifically, for example, such a resin that X in the formula (I) represents an isopropylidene group. The content of the polycarbonate resin having a bisphenol A structure in the polycarbonate resin (A) is preferably from 50 mass% to 100 mass%, more preferably from 75 mass% to 100 mass%, still more preferably from 85 mass% to 100 mass%.

In the present invention, the viscosity-average molecular weight (Mv) of the polycarbonate resin (A) is preferably from 9,000 to 50,000, more preferably from 10,000 to 30,000, still more preferably from 10,000 to 22,000 from the viewpoints of its flowability and the strength of a molded article to be obtained. In particular, when the polycarbonate resin composition of the present invention is used as a thin-walled optical molded article, such as a light-guiding plate, the viscosity-average molecular weight of the polycarbonate resin (A) is preferably from 10,000 to 15,000, more preferably from 10,000 to 14,200. When the viscosity-average molecular weight falls within the range, the flowability of the polycarbonate resin composition is improved. In addition, its initial YI value is low, and hence its color tone is improved.

The viscosity-average molecular weight (Mv) is a value calculated from the following Schnell's equation after the measurement of the limiting viscosity [η] of a methylene chloride solution (concentration: g/l) at 20°C.

$$[\eta] = 1.23 \times 10^{-5} \times Mv^{0.83}$$

The polycarbonate resin composition of the present invention includes the polycarbonate resin (A) as a main component, and its content is preferably 50 mass% or more, more preferably 70 mass% or more, still more preferably 85 mass% or more, still further more preferably 95 mass% or more. In addition, the content of the polycarbonate resin (A) in the polycarbonate resin composition is preferably 99.9 mass% or less.

<Polyether Compound (B)>

The polyether compound (B) to be incorporated into the polycarbonate resin composition of the present invention is represented by the following formula (1):

$$R^{B3}O\text{-}(R^{B1}O)_m(R^{B2}O)_n\text{-}R^{B4} \qquad (1)$$

wherein $R^{B1}$ and $R^{B2}$ each represent an alkylene group having 2 to 6 carbon atoms, "m"+"n" represents 5 or more and less than 300, when "m" represents 2 or more, $R^{B1}$s may be identical to or different from each other, and when "n" represents 2 or more, $R^{B2}$s may be identical to or different from each other, provided that not all of $R^{B1}$ and $R^{B2}$ are identical to each other, and $R^{B3}$ and $R^{B4}$ each represent a hydrogen atom, a hydrocarbon group having 1 to 30 carbon atoms, an alkanoyl group having 1 to 30 carbon atoms, an alkenoyl group having 2 to 30 carbon atoms, or a glycidyl group, and $R^{B3}$ and $R^{B4}$ may be identical to or different from each other.

"m"+"n" represents 5 or more and less than 300. From the viewpoint that the effects of the present invention are obtained, and from the viewpoint of compatibility between the polycarbonate resin (A) and the polyether compound (B), "m"+"n" represents preferably from 5 to 200, more preferably from 5 to 150, still more preferably from 8 to 100, still further more preferably from 10 to 100.

$R^{B1}$ and $R^{B2}$ each represent an alkylene group having 2 to 6 carbon atoms. In the formula (1), when "m" represents 2 or more, $R^{B1}$s may be identical to or different from each other, and when "n" represents 2 or more, $R^{B2}$s may be identical to or different from each other, provided that not all of $R^{B1}$ and $R^{B2}$ are identical to each other. That is, the polyether compound (B) contains two or more kinds of oxyalkylene groups. When the polyether compound (B) has the above-mentioned structure, a polycarbonate resin composition having the following features can be obtained: an increase in YI value of the composition is suppressed even at the time of its retention and molding at high temperature; and even a molded article obtained by molding the composition after the composition has been retained at a temperature exceeding 340°C for a long time period has satisfactory long-term stability of its optical characteristics.

From the above-mentioned viewpoints, the alkylene group in each of $R^{B1}$ and $R^{B2}$ has preferably 2 to 5 carbon atoms, more preferably 2 to 4 carbon atoms.

In addition, $R^{B1}$ and $R^{B2}$ each preferably include a linear alkylene group having 3 to 6 carbon atoms. The number of carbon atoms of the linear alkylene group is preferably from 3 or 4. When $R^{B1}$ and $R^{B2}$ each include a linear alkylene group having 3 to 6 carbon atoms, a polycarbonate resin composition having the following features is obtained: an increase in YI value of the composition is suppressed even at the time of its retention and molding at high temperature; even a molded article obtained by molding the composition after the composition has been retained at a temperature exceeding 340°C for a long time period has long-term stability of its optical characteristics; and the composition has a

satisfactory antistatic property. In particular, a polycarbonate resin composition for a light-guiding plate application preferably has a satisfactory antistatic property because, when its antistatic property is low (its electric potential is high), dust is liable to adhere to the composition after its molding, and hence may be responsible for a failure.

$R^{B1}$ and $R^{B2}$ represent one or more kinds selected from the group consisting of, for example, an ethylene group, a trimethylene group, a propylene group, a tetramethylene group, a butylene group, a pentamethylene group, and a hexamethylene group, preferably two or more kinds selected from the group consisting of an ethylene group, a trimethylene group, a propylene group, and a tetramethylene group, still more preferably two or more kinds selected from the group consisting of an ethylene group, a propylene group, and a tetramethylene group. Further, $R^{B1}$ and $R^{B2}$ each preferably include one or more kinds selected from the group consisting of a trimethylene group, a tetramethylene group, a pentamethylene group, and a hexamethylene group, more preferably include one or more kinds selected from the group consisting of a trimethylene group and a tetramethylene group, and still more preferably include a tetramethylene group.

A polyoxyalkylene group represented by $(R^{B1}O)_m$ is not limited to a group having a single oxyalkylene unit as a repeating unit, such as a polyoxyethylene group or a polyoxypropylene group, and may be a group having a plurality of oxyalkylene units different from each other in number of carbon atoms, such as an oxyethylene unit and an oxypropylene unit, as repeating units.

A polyoxyalkylene group represented by $(R^{B2}O)_n$ is not limited to a group having a single oxyalkylene unit as a repeating unit, such as a polyoxyethylene group or a polyoxypropylene group, and may be a group having a plurality of oxyalkylene units different from each other in number of carbon atoms, such as an oxyethylene unit and an oxypropylene unit, as repeating units. It should be noted that not all of $R^{B1}$ and $R^{B2}$ are identical to each other.

The combination of $R^{B1}$ and $R^{B2}$ in the formula (1) is preferably a combination in which $R^{B1}$ represents an alkylene group having 2 or 3 carbon atoms and $R^{B2}$ represents an alkylene group having 3 or 4 carbon atoms.

In addition, the combination of $R^{B1}$ and $R^{B2}$ in the formula (1) is more preferably a combination in which $R^{B1}$ represents an alkylene group having 2 or 3 carbon atoms, and $R^{B2}$ represents a tetramethylene group. The combination is still more preferably a combination in which $R^{B1}$ represents an ethylene group or a propylene group, and $R^{B2}$ represents a tetramethylene group, still further more preferably a combination in which $R^{B1}$ represents a propylene group, and $R^{B2}$ represents a tetramethylene group. When the combination of $R^{B1}$ and $R^{B2}$ is any such combination, an increase in YI value of the composition is suppressed even at the time of its retention and molding at high temperature, and long-term stability of optical characteristics is obtained even in a molded article obtained by molding the composition after the composition has been retained at a temperature exceeding 340°C for a long time period. In addition, the antistatic property of the composition is improved.

Examples of the hydrocarbon group having 1 to 30 carbon atoms represented by each of $R^{B3}$ and $R^{B4}$ include an alkyl group having 1 to 30 carbon atoms, an alkenyl group having 2 to 30 carbon atoms, an aryl group having 6 to 30 carbon atoms, and an aralkyl group having 7 to 30 carbon atoms.

Each of the alkyl group and the alkenyl group may be linear, branched, or cyclic. Examples thereof include a methyl group, an ethyl group, a n-propyl group, an isopropyl group, various butyl groups, various pentyl groups, various hexyl groups, various octyl groups, a cyclopentyl group, a cyclohexyl group, an allyl group, a propenyl group, various butenyl groups, various hexenyl groups, various octenyl groups, a cyclopentenyl group, and a cyclohexenyl group. Examples of the aryl group include a phenyl group, a tolyl group, and a xylyl group. Examples of the aralkyl group include a benzyl group, a phenethyl group, and a methylbenzyl group.

The alkanoyl group having 1 to 30 carbon atoms represented by each of $R^{B3}$ and $R^{B4}$ may be linear or branched, and examples thereof include a methanoyl group, an ethanoyl group, a *n*-propanoyl group, an isopropanoyl group, a *n*-butanoyl group, a *t*-butanoyl group, a *n*-hexanoyl group, a n-octanoyl group, a n-decanoyl group, a n-dodecanoyl group, and a benzoyl group. Among them, an alkanoyl group having 1 to 20 carbon atoms is preferred from the viewpoints of the compatibility, heat stability, and ease of production of the composition.

The alkenoyl group having 2 to 30 carbon atoms represented by each of $R^{B3}$ and $R^{B4}$ may be linear or branched, and examples thereof include an ethenoyl group, a n-propenoyl group, an isopropenoyl group, a n-butenoyl group, a *t*-butenoyl group, a n-hexenoyl group, a n-octenoyl group, a n-decenoyl group, and a n-dodecenoyl group. Among them, an alkenoyl group having 2 to 10 carbon atoms is preferred, and an alkenoyl group having 2 to 6 carbon atoms is more preferred from the viewpoint that the molecular weight of the composition is reduced, from the viewpoints of its compatibility and solubility, and from the viewpoint of its ease of production.

The polyether compound (B) represented by the formula (1) is preferably such a polyoxyalkylene glycol that, in the formula (1), $R^{B1}$ represents an alkylene group having 2 or 3 carbon atoms, $R^{B2}$ represents an alkylene group having 3 or 4 carbon atoms, and $R^{B3}$ and $R^{B4}$ each represent a hydrogen atom. The compound is more preferably such a polyoxyalkylene glycol that, in the formula (1), $R^{B1}$ represents an alkylene group having 2 or 3 carbon atoms, $R^{B2}$ represents a tetramethylene group, and $R^{B3}$ and $R^{B4}$ each represent a hydrogen atom, still more preferably such a polyoxyalkylene glycol that, in the formula (1), $R^{B1}$ represents an ethylene group or a propylene group, $R^{B2}$ represents a tetramethylene group, and $R^{B3}$ and $R^{B4}$ each represent a hydrogen atom, still further more preferably such a polyoxyalkylene glycol that, in the formula (1), $R^{B1}$ represents a propylene group, $R^{B2}$ represents a tetramethylene group, and $R^{B3}$ and $R^{B4}$ each represent a hydrogen atom.

Specific examples of the polyether compound (B) include polyoxyethylene glycol-polyoxypropylene glycol, polyoxyethylene glycol-polyoxytetramethylene glycol, polyoxytrimethylene glycol-polyoxytetramethylene glycol, polyoxypropylene glycol-polyoxytetramethylene glycol, polyoxyethylene-polyoxypropylene-bisphenol A ether, and polyethylene glycol-polypropylene glycol-allyl ether.

Among them, one or more kinds selected from the group consisting of polyoxyethylene glycol-polyoxypropylene glycol, polyoxyethylene glycol-polyoxytetramethylene glycol, polyoxytrimethylene glycol-polyoxytetramethylene glycol, and polyoxypropylene glycol-polyoxytetramethylene glycol are preferred, and one or more kinds selected from the group consisting of polyoxyethylene glycol-polyoxypropylene glycol, polyoxyethylene glycol-polyoxytetramethylene glycol, and polyoxypropylene glycol-polyoxytetramethylene glycol are more preferred. From the viewpoints of the suppression of an increase in YI value of the composition even at the time of its retention and molding at high temperature, and the achievement of both the long-term stability of optical characteristics in a molded article obtained by molding the composition after the composition has been retained at a temperature exceeding 340°C for a long time period, and the antistatic property of the molded article, one or more kinds selected from the group consisting of polyoxyethylene glycol-polyoxytetramethylene glycol and polyoxypropylene glycol-polyoxytetramethylene glycol are still more preferred, and polyoxypropylene glycol-polyoxytetramethylene glycol is still further more preferred.

The molecular weight of the polyether compound (B) in terms of weight-average molecular weight (Mw) falls within the range of preferably from 200 to 10,000, more preferably from 500 to 8,000, still more preferably from 800 to 5,000, still further more preferably from 1,000 to 4,000.

The content of the polyether compound (B) in the polycarbonate resin composition of the present invention is preferably from 0.1 part by mass to 2.0 parts by mass, more preferably from 0.2 part by mass to 2.0 parts by mass, still more preferably from 0.5 part by mass to 2.0 parts by mass with respect to 100 parts by mass of the polycarbonate resin (A) from the viewpoint that the effects of the present invention are obtained. When the content of the polyether compound (B) is 0.1 part by mass or more with respect to 100 parts by mass of the polycarbonate resin (A), an increase in YI value of the composition is suppressed, and hence the color tone thereof is improved. In addition, when the content is 2.0 parts by mass or less, the transmittance thereof is satisfactory.

From the viewpoint of the achievement of both the effects of the present invention and the antistatic property, when the polyether compound (B) is such a polyether compound that, in the formula (1), $R^{B1}$ represents an ethylene group, and $R^{B2}$ represents a tetramethylene group, its content is preferably from 0.1 part by mass to 1.3 parts by mass, more preferably from 0.1 part by mass to 1.0 part by mass, still more preferably from 0.1 part by mass to 0.9 part by mass, still further more preferably from 0.1 part by mass to 0.6 part by mass, still further more preferably from 0.1 part by mass to 0.5 part by mass with respect to 100 parts by mass of the polycarbonate resin (A). When the content is 0.1 part by mass or more, a satisfactory color tone is obtained, and when the content is 1.3 parts by mass or less, a satisfactory antistatic property is obtained.

Meanwhile, when the polyether compound (B) is such a polyether compound that, in the formula (1), $R^{B1}$ represents a propylene group, and $R^{B2}$ represents a tetramethylene group, its content is preferably from 0.1 part by mass to 0.9 part by mass, more preferably from 0.1 part by mass to 0.8 part by mass, still more preferably from 0.1 part by mass to 0.6 part by mass with respect to 100 parts by mass of the polycarbonate resin (A). When the content is 0.1 part by mass or more, a satisfactory color tone is obtained, and when the content is 0.9 part by mass or less, a satisfactory antistatic property is obtained.

The antistatic property may specifically be evaluated by a method described in Examples.

<Antioxidant (C)>

The antioxidant (C) to be incorporated into the polycarbonate resin composition of the present invention is represented by the following formula (2):

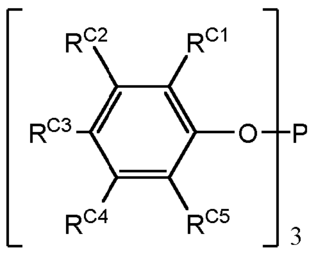

(2)

wherein, in the formula (2), $R^{C1}$ to $R^{C5}$ each independently represent a hydrogen atom, an alkyl group having 1 to 12

carbon atoms, or an aryl group having 6 to 14 carbon atoms, provided that not all of $R^{C1}$ to $R^{C5}$ represent hydrogen atoms.

None of a phosphorus-based antioxidant having a pentaerythritol structure, such as ADK STAB PEP-36 or Doverphos S-9228PC, and a phosphorus-based antioxidant, such as SUMILIZER GP, described in Examples of the patent literatures corresponds to the compound represented by the formula (2), and the antioxidants each have a structure represented by P-O-$CH_2$-. However, the structure is weak against heat, and hence even when any such phosphorus-based antioxidant is used in combination with a polyether compound, the thermal decomposition of the antioxidant is liable to occur under a high-temperature condition exceeding 340°C. Accordingly, when each of the polycarbonate resin compositions disclosed in the patent literatures is retained in a molding machine at high temperature for a long time period, the remaining ratio of its antioxidant reduces. As a result, even in the case where an increase in YI value of the composition at the time of its high-temperature molding can be suppressed, when the composition is molded under a high-temperature condition to provide a molded article, and then the molded article undergoes thermal history, a change in color tone thereof is liable to occur. Accordingly, it has been difficult to stably maintain the optical characteristics thereof over a long time period.

The inventors of the present invention have found that, when the specific phosphorus-based antioxidant represented by the formula (2) is used, and is used in combination with the polyether compound (B) described above and the epoxy compound (D) described below, a polycarbonate resin composition having the following features is obtained: the composition can be molded even under a high-temperature condition exceeding 340°C without the impairment of its optical characteristics; and the composition enables the production of a molded article that shows a small change in color tone and hence can maintain stable optical characteristics over a long time period even when the molded article undergoes thermal history after the molding.

In the formula (2), $R^{C1}$ to $R^{C5}$ each independently represent a hydrogen atom, an alkyl group having 1 to 12 carbon atoms, or an aryl group having 6 to 14 carbon atoms, provided that not all of $R^{C1}$ to $R^{C5}$ represent hydrogen atoms in terms of an antioxidizing effect. That is, at least one of $R^{C1}$ to $R^{C5}$ represents an alkyl group having 1 to 12 carbon atoms, or an aryl group having 6 to 14 carbon atoms. A compound in which any two of $R^{C1}$ to $R^{C5}$ each represent an alkyl group having 1 to 12 carbon atoms, or an aryl group having 6 to 14 carbon atoms, and the others each represent a hydrogen atom is preferred.

Examples of the alkyl group having 1 to 12 carbon atoms include a methyl group, an ethyl group, a n-propyl group, an isopropyl group, various butyl groups, various pentyl groups, various hexyl groups, various octyl groups, various decyl groups, and various dodecyl groups. Among them, one or more kinds selected from the group consisting of a methyl group, an ethyl group, a n-propyl group, an isopropyl group, various butyl groups, various pentyl groups, various hexyl groups, and various octyl groups are preferred, one or more kinds selected from the group consisting of a methyl group, an ethyl group, an isopropyl group, and a tert-butyl group are more preferred, and a tert-butyl group is still more preferred in terms of an antioxidizing effect.

Examples of the aryl group having 6 to 14 carbon atoms include a phenyl group, a tolyl group, and a xylyl group.

$R^{C1}$ to $R^{C5}$ more preferably represent one or more kinds selected from the group consisting of a hydrogen atom and an alkyl group having 1 to 12 carbon atoms among them from the viewpoint that the thermal decomposition of such antioxidant hardly occurs, and hence its antioxidizing effect is excellent; $R^{C1}$ to $R^{C5}$ still more preferably represent one or more kinds selected from the group consisting of a hydrogen atom, a methyl group, an ethyl group, an isopropyl group, and a tert-butyl group, and still further more preferably represent one or more kinds selected from the group consisting of a hydrogen atom and a tert-butyl group.

The antioxidant (C) is particularly preferably such a compound that, in the formula (2), $R^{C1}$ and $R^{C3}$ each represent a tert-butyl group, and $R^{C2}$, $R^{C4}$, and $R^{C5}$ each represent a hydrogen atom (tris(2,4-di-*tert*-butylphenyl)phosphite).

The content of the antioxidant (C) in the polycarbonate resin composition of the present invention is preferably from 0.001 part by mass to 0.4 part by mass, more preferably from 0.01 part by mass to 0.4 part by mass, still more preferably from 0.015 part by mass to 0.3 part by mass, still further more preferably from 0.05 part by mass to 0.3 part by mass with respect to 100 parts by mass of the polycarbonate resin (A) from the viewpoint that a polycarbonate resin composition having the following features is obtained: the composition can be molded even under a high-temperature condition exceeding 340°C without the impairment of its optical characteristics; and the composition enables the production of a molded article that can maintain stable optical characteristics over a long time period.

<Epoxy Compound (D)>

The epoxy compound (D) is used for improving the long-term stability of optical characteristics in a molded article after the molding of the polycarbonate resin composition under a high-temperature condition. The epoxy compound (D) may be a compound having at least one epoxy group in a molecule thereof, and examples thereof include a glycidyl ether compound, a glycidyl ester compound, a glycidyl amine compound, a glycidyl imide compound, a cyclic epoxy compound, and an epoxidized oil. Among them, a cyclic epoxy compound is preferred and an alicyclic epoxy compound

is more preferred from the viewpoints of the above-mentioned effects. The alicyclic epoxy compound refers to a cyclic aliphatic compound having an alicyclic epoxy group, that is, an epoxy group obtained by adding one oxygen atom to an ethylene bond in an aliphatic ring.

Examples of the alicyclic epoxy compound may include 3',4'-epoxycyclohexylmethyl-3,4-epoxycyclohexane carboxylate, bis(3,4-epoxycyclohexylmethyl) adipate, vinylcyclohexene diepoxide, N-methyl-4,5-epoxycyclohexane-1,2-dicarboxylic acid imide, N-ethyl-4,5-epoxycyclohexane-1,2-dicarboxylic acid imide, N-phenyl-4,5-epoxycyclohexane-1,2-dicarboxylic acid imide, N-naphthyl-4,5-epoxycyclohexane-1,2-dicarboxylic acid imide, and N-tolyl-3-methyl-4,5-epoxycyclohexane-1,2-dicarboxylic acid imide. Among them, 3',4'-epoxycyclohexylmethyl-3,4-epoxycyclohexane carboxylate is preferred.

The epoxy compounds (D) may be used alone or in combination thereof.

The content of the epoxy compound (D) in the polycarbonate resin composition is preferably from 0.001 part by mass to 0.5 part by mass, more preferably from 0.005 part by mass to 0.2 part by mass, still more preferably from 0.01 part by mass to 0.1 part by mass with respect to 100 parts by mass of the polycarbonate resin (A). When the content of the epoxy compound is 0.001 part by mass or more with respect to 100 parts by mass of the polycarbonate resin (A), even a molded article obtained by molding the composition at a temperature exceeding 340°C can maintain stable optical characteristics over a long time period.

The total content of the components (A) to (D) in the polycarbonate resin composition of the present invention is preferably 50 mass% or more, more preferably 70 mass% or more, still more preferably 85 mass% or more, still further more preferably 95 mass% or more from the viewpoint that the effects of the present invention are obtained. In addition, the upper limit thereof is 100 mass%.

<Additive>

An arbitrary additive may be appropriately added to the polycarbonate resin composition of the present invention in addition to the above-mentioned components (A) to (D). An example of the additive is a polyorganosiloxane.

The polyorganosiloxane is used for improving the releasability of the polycarbonate resin composition from a die to be used at the time of its molding. The polyorganosiloxane is preferably a compound having one or more kinds of functional groups, such as an alkoxy group, an aryloxy group, a polyoxyalkylene group, a carboxyl group, a silanol group, an amino group, a mercapto group, an epoxy group, and a vinyl group.

The viscosity of the polyorganosiloxane at 25°C is preferably 10 $mm^2/s$ or more from the viewpoint of a lubricating effect serving as the releasability, and is preferably 200 mm2/s or less from the viewpoint of its dispersibility in the polycarbonate resin. From the viewpoints, the viscosity of the polyorganosiloxane falls within the range of more preferably from 20 mm2/s to 150 $mm^2/s$, still more preferably from 40 mm2/s to 120 mm2/s.

A difference between the refractive index of the polyorganosiloxane and the refractive index of the polycarbonate resin is preferably made as small as possible in order that the transparency of the polycarbonate resin may not be reduced at the addition of the polyorganosiloxane thereto. The refractive index of the polyorganosiloxane is preferably 1.45 or more, more preferably 1.50 or more, still more preferably 1.52 or more because the refractive index of the polycarbonate resin is 1.58.

The polyorganosiloxanes may be used alone or in combination thereof.

The blending amount of the polyorganosiloxane is preferably from 0.01 part by mass to 0.15 part by mass, more preferably from 0.02 part by mass to 0.15 part by mass, still more preferably from 0.05 part by mass to 0.1 part by mass with respect to 100 parts by mass of the polycarbonate resin (A). When the blending amount falls within the range, the polyorganosiloxane can concert with any other component to improve the releasability. Further, even under a high-temperature molding condition exceeding 340°C, in particular, a continuous molding condition, the amount of a mold deposit can be significantly reduced.

A method of producing the polycarbonate resin composition of the present invention is not particularly limited. The polycarbonate resin composition may be produced, for example, by mixing the components (A) to (D), and as required, and an additive, and melting and kneading the mixture. The melting and kneading may be performed by a typically used method, for example, a method using a ribbon blender, a Henschel mixer, a Banbury mixer, a drum tumbler, a single-screw extruder, a double-screw extruder, a co-kneader, a multiple-screw extruder, or the like. In normal cases, a heating temperature at the time of the melting and kneading is appropriately selected from the range of from about 220°C to about 300°C.

<Various Characteristics of Polycarbonate Resin Composition>

The polycarbonate resin composition of the present invention is preferably such that the remaining ratio of the antioxidant (C) in a molded article obtained by molding the resin composition (hereinafter sometimes referred to as "molded article (I)") with respect to the amount of the antioxidant (C) in the resin composition is 60% or more.

The molded article (I) is preferably produced by molding the resin composition by the following method (I).

Method (I): The polycarbonate resin composition is pelletized and then dried. Next, a molded article measuring 40 mm long by 80 mm wide by 3.2 mm thick is molded out of the composition by an injection molding method at a cylinder temperature of 350°C and a die temperature of 80°C for a cycle time of 50 seconds.

When the remaining ratio of the antioxidant (C) (hereinafter referred to as "remaining ratio (1) of the antioxidant") is 60% or more, the initial YI value of the molded article is suppressed within a low range, and the long-term stability of the optical characteristics thereof after the molding is improved.

The remaining ratio (1) of the antioxidant is a value calculated from the following equation.

$$\text{Remaining ratio (1)} = (b1/a1) \times 100\ (\%)$$

a1: The content (ppm by mass) of the antioxidant in the polycarbonate resin composition used in the molding of the molded article (I)

b1: The remaining amount (ppm by mass) of the antioxidant in the molded article (I)

The polycarbonate resin composition of the present invention is preferably such that the remaining ratio of the antioxidant (C) in a molded article obtained by molding the resin composition after the resin composition has been retained in a molding machine at 350°C for 20 minutes (hereinafter sometimes referred to as "molded article (II)") with respect to the amount of the antioxidant (C) in the resin composition is 50% or more.

The molded article (II) is preferably produced by molding the resin composition by the following method (II).

Method (II): The polycarbonate resin composition is pelletized and then dried. Next, 20 or more shots of injection molding are performed by an injection molding method at a cylinder temperature of 350°C and a die temperature of 80°C for a cycle time of 50 seconds to stabilize the conditions. After that, the cycle time is changed to 5 minutes, and a molded article measuring 40 mm long by 80 mm wide by 3.2 mm thick is molded out of the composition. Injection-molded articles in the fifth, sixth, and seventh shots are each defined as the molded article (II) that has undergone retention thermal history in the molding machine for 20 minutes.

The average of the measured values of the injection-molded articles in the fifth, sixth, and seventh shots is adopted in various measurements and evaluations each using the molded article (II) molded out of the composition by the method (II).

When the remaining ratio of the antioxidant (C) (hereinafter referred to as "remaining ratio (2) of the antioxidant") is 50% or more, the YI value of the molded article obtained by molding the composition after the composition has been retained under a high-temperature condition exceeding 340°C is suppressed within a low range, and the long-term stability of the optical characteristics thereof after the molding is improved.

The remaining ratio (2) of the antioxidant is a value calculated from the following equation.

$$\text{Remaining ratio (2)} = (b2/a2) \times 100\ (\%)$$

a2: The content (ppm by mass) of the antioxidant in the polycarbonate resin composition used in the molding of the molded article (II)

b2: The remaining amount (ppm by mass) of the antioxidant in the molded article (II)

Each of the content of the antioxidant in the polycarbonate resin composition and the remaining amounts of the antioxidant in the respective molded articles is measured by high-performance liquid chromatography, and may specifically be measured by a method described in Examples.

In terms of the color tone of the polycarbonate resin composition of the present invention when used as an optical molded article, the YI value (initial YI value: $YI_1$) of the molded article (I) having a thickness of 3.2 mm, which is measured with a spectrophotometer under the conditions of a C light source and a two-degree field of view, is preferably 1.05 or less. The $YI_1$ is more preferably 1.03 or less, still more preferably 1.00 or less, still further more preferably 0.98 or less.

In addition, when the YI value of the molded article (II) having a thickness of 3.2 mm, which is measured with a spectrophotometer under the conditions of a C light source and a two-degree field of view, is represented by $YI_2$, and the YI value after the molded article (II) has been heated at 85°C for 200 hours is represented by $YI_3$, $\Delta(YI_3\text{-}YI_2)$ is preferably 0.10 or less. The $\Delta(YI_3\text{-}YI_2)$ is more preferably 0.07 or less, still more preferably 0.06 or less.

When the $\Delta(YI_3\text{-}YI_2)$ of the polycarbonate resin composition is 0.10 or less, even in the case where the composition is retained and molded under a high-temperature condition, and then the resultant molded article undergoes thermal history, a change in color tone thereof is small, and hence the optical characteristics thereof are stably maintained over a long time period. Accordingly, the composition is suitable for the application of an optical molded article, such as a light-guiding plate.

The respective YI values may specifically be measured by a method described in Examples.

[Molded Article]

A molded article of the present invention includes the polycarbonate resin composition of the present invention described above. The molded article may be produced through the use of a melt-kneaded product of the polycarbonate resin composition or a pellet thereof obtained through melting and kneading as a raw material by an injection molding method, an injection compression molding method, an extrusion molding method, a blow molding method, a press molding method, a vacuum molding method, an expansion molding method, or the like. In particular, the molded article is preferably produced through the use of the resultant pellet by an injection molding method or an injection compression molding method.

The polycarbonate resin composition of the present invention is suitable for a molding method requiring a molding material to have high flowability, such as an injection molding method, because the composition can resist even molding at a high temperature exceeding 340°C. Although a molding temperature is not particularly limited, for example, when a thin-walled light-guiding plate is to be obtained, the composition is preferably molded at a temperature of from 280°C to 360°C.

The molded article of the present invention is useful as an optical molded article, in particular, a light-guiding plate because, even when the composition is retained and molded under a high-temperature condition exceeding 340°C, and then the molded article undergoes thermal history, a change in color tone thereof is small, and hence the long-term stability of the optical characteristics thereof is excellent. The shape of the light-guiding plate is not particularly limited, and may be a flat plate having a thickness of from several millimeters to several hundreds of micrometers, or may be a curved plate or prism transfer plate having a lens effect.

EXAMPLES

The present invention is described more specifically by way of Examples below, but the present invention is not limited to these Examples.

[Measurement of Viscosity-average Molecular Weight (Mv)]

A viscosity-average molecular weight (Mv) was calculated from the following equation (Schnell's equation) after the determination of a limiting viscosity [η] through the measurement of the viscosity of a methylene chloride solution (concentration: g/l) at 20°C with an Ubbelohde-type viscometer.

$$[\eta] = 1.23 \times 10^{-5} \times Mv^{0.83}$$

Components used in each example are as described below.

<Polycarbonate Resin (A)>

(A1): "TARFLON FN1200" (manufactured by Formosa Idemitsu Petrochemical Corporation, bisphenol Apolycarbonate resin, viscosity-average molecular weight (Mv) = 11,500)
(A2): "TARFLON FN1500" (manufactured by Formosa Idemitsu Petrochemical Corporation, bisphenol Apolycarbonate resin, viscosity-average molecular weight (Mv) = 14,200)
(A3): "TARFLON FN1700" (manufactured by Formosa Idemitsu Petrochemical Corporation, bisphenol Apolycarbonate resin, viscosity-average molecular weight (Mv) = 17,700)

<Polyether Compound (B)>

(B1): "POLYCERIN DC-1800E" (manufactured by NOF Corporation, polyoxytetramethylene glycol-polyoxyethylene glycol (50:50), Mw = 1,800)
(B2): "POLYCERIN DC-3000E" (manufactured by NOF Corporation, polyoxytetramethylene glycol-polyoxyethylene glycol (50:50), Mw = 3,000)

(B3): "UNILUBE 50DE-25" (manufactured by NOF Corporation, polyoxyethylene glycol-polyoxypropylene glycol (50:50), Mw = 1,800)
(B4): "POLYCERIN DCB-2000" (manufactured by NOF Corporation, polyoxypropylene glycol-polyoxytetramethylene glycol (40:60), Mw = 2,000)

<Antioxidant (C)>

(C1): "IRGAFOS 168" (manufactured by BASF, tris(2,4-di-*tert*-butylphenyl)phosphite)

<Antioxidant except (C)>

(c1): "Doverphos S-9228PC" (manufactured by Dover Chemical Corporation, bis(2,4-dicumylphenyl)pentaerythritol diphosphite)
(c2): "ADK STAB PEP-36" (manufactured by ADEKA Corporation, bis(2,6-di-*tert*-butyl-4-methylphenyl)pentaerythritol diphosphite)

<Epoxy Compound (D)>

(D1): "CELLOXIDE 2021P" (manufactured by Daicel Corporation, 3',4'-epoxycyclohexylmethyl-3,4-epoxycyclohexane carboxylate)

Examples 1 to 12 and Comparative Examples 1 to 6

In each example, the respective components were blended at a mass ratio shown in Table 1 to prepare a polycarbonate resin composition, and the composition was molded by the following methods to produce molded articles (I) to (III). The molded articles were used in various evaluations.

[Production of Molded Article (I)]

The polycarbonate resin composition was melted and kneaded with a vented double-screw extruder having a screw diameter of 37 mm ("TEM-37SS" manufactured by Toshiba Machine Co., Ltd.) at a cylinder temperature of 240°C, and the melt-kneaded product was subjected to strand cutting to provide a pellet. The resultant pellet was dried with a hot air circulation-type dryer at 120°C for from 5 hours to 7 hours. Twenty or more shots of injection molding were performed on the dried pellet in an electric injection molding machine "Toshiba EC40N" manufactured by Toshiba Machine Co., Ltd. through the use of a die from which one product measuring 40 mm long by 80 mm wide by 3.2 mm thick could be removed at a cylinder temperature of 350°C and a die temperature of 80°C for a cycle time of 50 seconds to stabilize the conditions. After that, injection-molded articles for 5 shots were collected.

(Measurement of $YI_1$)

The YI values of the resultant molded articles (I) for 5 shots were measured with a spectrophotometer ("U-4100" manufactured by Hitachi High-Technologies Corporation) under the conditions of a C light source and a two-degree field of view, and the average of the measured values was defined as an initial YI value "$YI_1$".
The $YI_1$ serving as the initial YI value was judged by the following criteria.

A: The $YI_1$ is 1.00 or less.
B: The $YI_1$ is more than 1.00 and 1.05 or less.
C: The $YI_1$ is more than 1.05.

[Production of Molded Article (II)]

After the molding of the molded articles (I) had been performed, molding was performed in the same manner as that described above except that the cycle time was changed to 5 minutes, and a molded article was removed every 5 minutes. Molded articles in fifth, sixth, and seventh shots injected after the composition had been retained in the molding machine for 20 minutes, 25 minutes, and 30 minutes, respectively were defined as molded articles (II).

(Measurement of $YI_2$)

The YI values of the molded articles (II) for 3 shots were measured in the same manner as that described above, and the average of the measured values was defined as a YI value "$YI_2$" after retention at 350°C for 20 minutes.

[Production of Molded Article (III)]

An endurance test was performed by storing the molded articles (II) in an oven at a temperature of 85°C for 200 hours, and the molded articles after the completion of the test were defined as molded articles (III).

(Measurement of $YI_3$)

The YI values of the molded articles (III) were measured in the same manner as that described above, and the average of the measured values was defined as a YI value "$YI_3$" after the endurance test.

(Evaluation of $\Delta(YI_3\text{-}YI_2)$)

The value of $\Delta(YI_3\text{-}YI_2)$ was calculated from the above-mentioned measurement results, and was judged by the following criteria. A smaller value means that, when a molded article obtained by molding the resin composition after the resin composition has been retained at high temperature for a long time period undergoes thermal history, a change in color tone thereof is smaller, and hence the long-term stability of the optical characteristics thereof is more excellent.

A: The $\Delta(YI_3\text{-}YI_2)$ is 0.06 or less.
B: The $\Delta(YI_3\text{-}YI_2)$ is more than 0.06 and 0.10 or less.
C: The $\Delta(YI_3\text{-}YI_2)$ is more than 0.10.

(Measurement and Evaluation of Remaining Ratio of Antioxidant)

The content of the antioxidant in the polycarbonate resin composition obtained in each example, and the remaining amounts of the antioxidant in the molded articles (I) and (II) thereof were measured by using high-performance liquid chromatography, and the remaining ratios (1) and (2) of the antioxidant were calculated from the following equations. The remaining amounts of the antioxidant in the molded articles were measured by the following method.

Each molded article was pulverized and dissolved in chloroform. After that, methanol was added to the solution, and a precipitated resin content was removed. The antioxidant in the solution after the removal of the resin content was determined by high-performance liquid chromatography.

$$\text{Remaining ratio (1)} = (b1/a1) \times 100\ (\%)$$

a1: The content (ppm by mass) of the antioxidant in the polycarbonate resin composition used in the molding of the molded article (I)
b1: The remaining amount (ppm by mass) of the antioxidant in the molded article (I)

$$\text{Remaining ratio (2)} = (b2/a2) \times 100\ (\%)$$

a2: The content (ppm by mass) of the antioxidant in the polycarbonate resin composition used in the molding of the molded article (II)
b2: The remaining amount (ppm by mass) of the antioxidant in the molded article (II)

In addition, the remaining ratio (2) of the antioxidant was judged by the following criteria.

A: The remaining ratio is 50% or more.
B: The remaining ratio is 40% or more and less than 50%.
C: The remaining ratio is less than 40%.

In addition, the polycarbonate resin composition obtained in each example was molded by the following method and evaluated for its antistatic property.

(Evaluation of Antistatic Property)

The polycarbonate resin composition was melted and kneaded with a vented double-screw extruder having a screw diameter of 37 mm ("TEM-37SS" manufactured by Toshiba Machine Co., Ltd.) at a cylinder temperature of 240°C, and the melt-kneaded product was subjected to strand cutting to provide a pellet. The resultant pellet was dried with a hot air circulation-type dryer at 120°C for from 5 hours to 7 hours. The pellet after the drying was molded with an injection molding machine ("ES-1000" manufactured by Nissei Plastic Industrial Co., Ltd.) by an injection molding method at a cylinder temperature of 320°C and a die temperature of 80°C for a cycle time of 50 seconds to produce a flat plate-shaped sample piece measuring 50 mm by 90 mm by 5 mm thick.

A surface potential in substantially the central portion of the flat plate-shaped test piece (electric potential near the middle point of the diagonals of the surface of the flat plate-shaped test piece) was measured with a handheld field meter (Model 511-CE manufactured by Trek Japan). At this time, the handheld field meter was fixed to a clamp so that the measurement could be performed at the same position every time.

The potential measurement was performed within 10 seconds after the removal of the flat plate-shaped test piece from the die, and the molding and the potential measurement were each performed 10 times, followed by the calculation of the average of n values where n represented 10. The value in Example 6 in which the value of the potential measurement was highest was defined as 1.0, and the value of the potential measurement in each example was normalized with respect thereto and judged by the following criteria. A smaller value means a more satisfactory antistatic property.

A: 0.1 or less
B: more than 0.1 and less than 0.4
C: 0.4 or more

Table 1

| | | | | Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Resin composition (part(s) by mass) | Polycarbonate resin (A) | (A1) FN1200 | Mv=11,500 | 100 | 100 | | | 100 | 100 | 100 | 100 | | | 100 | 100 |
| | | (A2) FN1500 | Mv=14,200 | | | 100 | 100 | | | | | 100 | | | |
| | | (A3) FN1700 | Mv=17,700 | | | | | | | | | | 100 | | |
| | Polyether compound (B) | (B1) POLYCERIN DC-1800E | PEG-PTMG | 0.6 | | | | | | 0.1 | 0.6 | 0.6 | 0.6 | 1.5 | 1.0 |
| | | (B2) POLYCERIN DC-3000E | PEG-PTMG | | 1.3 | | | | | | | | | | |
| | | (B3) UNILUBE 50DE-25 | PEG-PPG | | | | | 0.1 | 1.0 | | | | | | |
| | | (B4) POLYCERIN DCB-2000 | PPG-PTMG | | | 0.6 | 1.0 | | | | | | | | |
| | Antioxidant (C) | (C1) IRGAFOS 168 | | 0.1 | 0.1 | 0.2 | 0.05 | 0.1 | 0.1 | 0.1 | 0.05 | 0.1 | 0.1 | 0.015 | 0.01 |
| | Antioxidant except (C) | (c1) Doverphos S-9228PC | | | | | | | | | | | | | |
| | | (c2) ADK STAB PEP-36 | | | | | | | | | | | | | |
| | Epoxy compound (D) | (D1) CELLOXIDE 2021P | | 0.02 | 0.02 | 0.02 | 0.02 | 0.05 | 0.1 | 0.02 | 0.02 | 0.02 | 0.02 | 0.02 | 0.02 |
| Evaluation result | YI value | (1) Initial stage at 350°C | $YI_1$ | 0.97 | 0.98 | 1.05 | 1.03 | 1.00 | 0.98 | 1.00 | 0.96 | 0.97 | 1.02 | 0.96 | 0.97 |
| | | | Judgment | A | A | B | B | A | A | A | A | A | B | A | A |
| | | (2) After retention at 350°C for 20 minutes | $YI_2$ | 1.08 | 1.18 | 1.20 | 1.19 | 1.14 | 1.19 | 1.19 | 1.08 | 1.10 | 1.15 | 1.16 | 1.17 |
| | | $\Delta(YI_2-YI_1)$ | | 0.11 | 0.20 | 0.15 | 0.16 | 0.14 | 0.21 | 0.19 | 0.12 | 0.13 | 0.13 | 0.20 | 0.20 |
| | | (3) After endurance test at 85°C for 200 h | $YI_3$ | 1.09 | 1.20 | 1.23 | 1.22 | 1.16 | 1.22 | 1.20 | 1.10 | 1.11 | 1.17 | 1.18 | 1.21 |
| | | $\Delta(YI_3-YI_2)$ | | 0.01 | 0.02 | 0.03 | 0.03 | 0.02 | 0.03 | 0.01 | 0.02 | 0.01 | 0.02 | 0.02 | 0.04 |
| | | Judgment | | A | A | A | A | A | A | A | A | A | A | A | A |
| | Remaining ratio of antioxidant | (1) Initial stage at 350°C | % | 66 | 68 | 67 | 67 | 61 | 68 | 64 | 70 | 62 | 60 | 63 | 60 |
| | | (2) After retention at 350°C for 20 minutes | % | 55 | 58 | 55 | 57 | 52 | 55 | 51 | 58 | 56 | 51 | 51 | 46 |
| | | | Judgment | A | A | A | A | A | A | A | A | A | A | A | B |
| | Antistatic property | Electric potential (relative value) | | 0.3 | 0.3 | 0.1 | 0.2 | 0.6 | 1.0 | 0.2 | 0.3 | 0.3 | 0.3 | 0.4 | 0.3 |
| | | Judgment | | B | B | A | B | C | C | B | B | B | B | C | B |

Table 1 (Continued)

| | | | | Comparative Example | | | | | |
|---|---|---|---|---|---|---|---|---|---|
| | | | | 1 | 2 | 3 | 4 | 5 | 6 |
| Resin composition (part(s) by mass) | Polycarbonate resin (A) | (A1) FN1200 | Mv=11,500 | 100 | 100 | 100 | 100 | | |
| | | (A2) FN1500 | Mv=14,200 | | | | | | 100 |
| | | (A3) FN1700 | Mv=17,700 | | | | | 100 | |
| | Polyether compound (B) | (B1) POLYCERIN DC-1800E | PEG-PTMG | | | 1.0 | 1.0 | | |
| | | (B2) POLYCERIN DC-3000E | PEG-PTMG | | | | | | |
| | | (B3) UNILUBE 50DE-25 | PEG-PPG | | | | | | |
| | | (B4) POLYCERIN DCB-2000 | PPG-PTMG | | | | | | 1.0 |
| | Antioxidant (C) | (C1) IRGAFOS 168 | | 0.1 | 0.1 | | | | 0.2 |
| | Antioxidant except (C) | (c1) Doverphos S-9228PC | | | | 0.1 | | 0.1 | |
| | | (c2) ADK STAB PEP-36 | | | | | 0.1 | | |
| | Epoxy compound (D) | (D1) CELLOXIDE 2021P | | | 0.02 | 0.02 | 0.02 | | |
| Evaluation result | YI value | (1) Initial stage at 350°C | $YI_1$ | 1.20 | 1.19 | 0.96 | 0.95 | 0.97 | 1.04 |
| | | | Judgment | C | C | A | A | A | B |
| | | (2) After retention at 350°C for 20 minutes | $YI_2$ | 1.35 | 1.36 | 1.19 | 1.13 | 1.21 | 1.20 |
| | | $\Delta(YI_2-YI_1)$ | | 0.15 | 0.17 | 0.23 | 0.18 | 0.24 | 0.16 |
| | | (3) After endurance test at 85°C for 200 h | $YI_3$ | 1.42 | 1.37 | 1.35 | 1.26 | 1.36 | 1.31 |
| | | $\Delta(YI_3-YI_2)$ | | 0.07 | 0.01 | 0.16 | 0.13 | 0.15 | 0.11 |
| | | Judgment | | B | A | C | C | C | C |
| | Remaining ratio of antioxidant | (1) Initial stage at 350°C | % | 54 | 55 | 30 | 27 | 28 | 66 |
| | | (2) After retention at 350°C for 20 minutes | % | 35 | 37 | ≤1 | ≤1 | 2 | 49 |
| | | | Judgment | C | C | C | C | C | B |
| | Antistatic property | Electric potential (relative value) | | 0.1 | 0.1 | 0.3 | 0.3 | 0.1 | 0.2 |
| | | Judgment | | A | A | B | B | A | B |

The YI value (initial YI value: $YI_1$) of the molded article (I) of each of the polycarbonate resin compositions of Examples 1 to 12, and the YI value ($YI_2$) of the molded article (II) obtained by molding the composition after the composition had been retained in the molding machine at 350°C for 20 minutes were each suppressed within a low range. Further, when the molded article (II) in each example was subjected to the endurance test at 85°C for 200 hours, the difference $\Delta(YI_3-YI_2)$ between its YI values before and after the test was 0.06 or less. Accordingly, it was found that, even when a molded article obtained by molding the resin composition in each example after the resin composition had been retained at high temperature for a long time period underwent thermal history, its optical characteristics were stably maintained. In addition, the remaining ratio of the antioxidant was high in each of the molded articles (I) and (II).

In contrast, in Comparative Example 1 free of the polyether compound (B) and the epoxy compound (D), the $YI_1$ to the $YI_3$ each had a high value, and hence yellowing occurred in each of the molding process and the endurance test after the molding. In Comparative Example 2 free of the polyether compound (B), the $YI_1$ to the $YI_3$ each had a high value. In each of Comparative Examples 3 to 5 in which the antioxidant deviates from the scope of the present invention, the remaining ratio of the antioxidant in the molded article (II) obtained by molding the resin composition after the resin composition has been retained in the molding machine at 350°C for 20 minutes is low, and the change in color tone before and after the endurance test ($\Delta(YI_3-YI_2)$) is large. In addition, it was found that, in the resin composition of Comparative Example 6 free of the epoxy compound (D), the $\Delta(YI_3-YI_2)$ was more than 0.10, and hence the change in color tone of the molded article before and after the endurance test was large.

In addition, comparison between Examples 1 to 4 and 7 to 12, and Examples 5 and 6 showed that, in each of Examples 1 to 4 and 7 to 12 in which such a compound that $R^{B1}$ and $R^{B2}$ in the formula (1) included at least a linear alkylene group having 3 to 6 carbon atoms was used as the polyether compound (B), the antistatic property was more satisfactory. Further, the antistatic property of the polycarbonate resin composition of Example 3 in which the polyether compound (B) was the polyoxypropylene glycol-polyoxytetramethylene glycol, and its content was from 0.1 part by mass to 0.9 part by mass with respect to 100 parts by mass of the polycarbonate resin (A) was particularly satisfactory.

INDUSTRIAL APPLICABILITY

Even when the polycarbonate resin composition of the present invention is retained in a molding machine at a high temperature exceeding 340°C, an increase in YI value thereof is suppressed. Further, even when a molded article obtained by molding the resin composition after the resin composition has been retained at high temperature for a long time period undergoes thermal history, the molded article shows a small change in color tone and hence has satisfactory long-term stability of its optical characteristics. Therefore, the molded article including the resin composition is suitable as an optical molded article, in particular, a thin-walled light-guiding plate for a mobile terminal or an on-vehicle light-guiding plate for a car navigation system or the like.

## Claims

1. A polycarbonate resin composition, comprising:

   a polycarbonate resin (A);
   a polyether compound (B) represented by the following formula (1):

   $$R^{B3}O\text{-}(RB^{1}O)_{m}(RB^{2}O)_{n}\text{-}RB^{4} \qquad (1)$$

   wherein $R^{B1}$ and $R^{B2}$ each represent an alkylene group having 2 to 6 carbon atoms, "m"+"n" represents 5 or more and less than 300, when "m" represents 2 or more, $R^{B1}$s may be identical to or different from each other, and when "n" represents 2 or more, $R^{B2}$s may be identical to or different from each other, provided that not all of $R^{B1}$ and $R^{B2}$ are identical to each other, and $R^{B3}$ and $R^{B4}$ each represent a hydrogen atom, a hydrocarbon group having 1 to 30 carbon atoms, an alkanoyl group having 1 to 30 carbon atoms, an alkenoyl group having 2 to 30 carbon atoms, or a glycidyl group, and $R^{B3}$ and $R^{B4}$ may be identical to or different from each other;
   an antioxidant (C) represented by the following formula (2):

   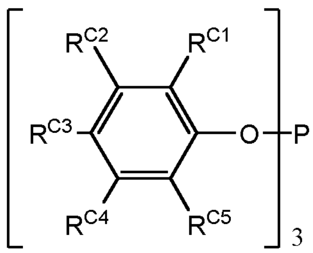

   (2)

   wherein
   in the formula (2), $R^{C1}$ to $R^{C5}$ each independently represent a hydrogen atom, an alkyl group having 1 to 12 carbon atoms, or an aryl group having 6 to 14 carbon atoms, provided that not all of $R^{C1}$ to $R^{C5}$ represent hydrogen atoms; and
   an epoxy compound (D).

2. The resin composition according to claim 1, wherein, in the formula (1), $R^{B1}$ represents an alkylene group having 2 or 3 carbon atoms, and $R^{B2}$ represents a tetramethylene group.

3. The resin composition according to claim 2, wherein, in the formula (1), $R^{B1}$ represents an ethylene group, and $R^{B2}$ represents a tetramethylene group.

4. The resin composition according to claim 2, wherein, in the formula (1), $R^{B1}$ represents a propylene group, and $R^{B2}$ represents a tetramethylene group.

5. The resin composition according to any one of claims 1 to 4, wherein a remaining ratio of the antioxidant (C) in a molded article (I) obtained by molding the resin composition with respect to an amount of the antioxidant (C) in the resin composition is 60% or more.

6. The resin composition according to any one of claims 1 to 5, wherein a remaining ratio of the antioxidant (C) in a molded article (II) obtained by molding the resin composition after the resin composition has been retained in a molding machine at 350°C for 20 minutes with respect to an amount of the antioxidant (C) in the resin composition is 50% or more.

7. The resin composition according to claim 6, wherein, when a YI value of the molded article (II) having a thickness of 3.2 mm, which is measured with a spectrophotometer under conditions of a C light source and a two-degree field of view, is represented by $YI_2$, and a YI value after the molded article (II) has been heated at 85°C for 200 hours is represented by $YI_3$, $\Delta(YI_3\text{-}YI_2)$ is 0.10 or less.

8. The resin composition according to any one of claims 1 to 7, wherein, in the formula (2), $R^{C1}$ and $R^{C3}$ each represent a tert-butyl group, and $R^{C2}$, $R^{C4}$, and $R^{C5}$ each represent a hydrogen atom.

9. The resin composition according to any one of claims 1 to 8, wherein the epoxy compound (D) comprises a cyclic epoxy compound.

10. The resin composition according to any one of claims 1 to 9, wherein a content of the polyether compound (B) with respect to 100 parts by mass of the polycarbonate resin (A) is from 0.1 part by mass to 2.0 parts by mass.

11. The resin composition according to any one of claims 3 to 9, wherein a content of the polyether compound (B) with respect to 100 parts by mass of the polycarbonate resin (A) is from 0.1 part by mass to 1.3 parts by mass.

12. The resin composition according to any one of claims 4 to 9, wherein a content of the polyether compound (B) with respect to 100 parts by mass of the polycarbonate resin (A) is from 0.1 part by mass to 0.9 part by mass.

13. The resin composition according to any one of claims 1 to 12, wherein a content of the antioxidant (C) with respect to 100 parts by mass of the polycarbonate resin (A) is from 0.001 part by mass to 0.4 part by mass.

14. The resin composition according to any one of claims 1 to 13, wherein a content of the epoxy compound (D) with respect to 100 parts by mass of the polycarbonate resin (A) is from 0.001 part by mass to 0.5 part by mass.

15. The resin composition according to any one of claims 1 to 14, wherein the polycarbonate resin (A) has a viscosity-average molecular weight of from 10,000 to 14,200, wherein the viscosity-average molecular weight was calculated as described in the description.

16. A molded article, comprising the resin composition of any one of claims 1 to 15.

17. The molded article according to claim 16, wherein the molded article comprises a light-guiding plate.

## Patentansprüche

1. Polycarbonatharz-Zusammensetzung, umfassend:

ein Polycarbonatharz (A);
eine Polyetherverbindung (B) der folgenden Formel (1):

$$R^{B3}O\text{-}(R^{B1}O)_m(R^{B2}O)_n\text{-}R^{B4} \qquad (1)$$

wobei $R^{B1}$ und $R^{B2}$ jeweils für eine Alkylengruppe mit 2 bis 6 Kohlenstoffatomen stehen, "m"+"n" für 5 oder mehr und weniger als 300 steht, wenn "m" für 2 oder mehr steht, können die $R^{B1}$ gleich oder verschieden voneinander sein, und wenn "n" für 2 oder mehr steht, können die $R^{B2}$ gleich oder verschieden voneinander sein, mit der Maßgabe, dass nicht alle $R^{B1}$ und $R^{B2}$ gleich sind, und $R^{B3}$ und $R^{B4}$ jeweils für ein Wasserstoffatom, eine Kohlenwasserstoffgruppe mit 1 bis 30 Kohlenstoffatomen, eine Alkanoylgruppe mit 1 bis 30 Kohlenstoffatomen, eine Alkenoylgruppe mit 2 bis 30 Kohlenstoffatomen oder eine Glycidylgruppe stehen und $R^{B3}$ und $R^{B4}$ gleich oder verschieden voneinander sein können;
ein Antioxidationsmittel (C) der folgenden Formel (2):

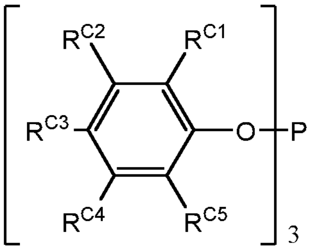
(2)

wobei in der Formel (2)

$R^{C1}$ bis $R^{C5}$ jeweils unabhängig voneinander für ein Wasserstoffatom, eine Alkylgruppe mit 1 bis 12 Kohlenstoffatomen oder eine Arylgruppe mit 6 bis 14 Kohlenstoffatomen stehen, mit der Maßgabe, dass nicht alle $R^{C1}$ bis $R^{C5}$ für Wasserstoffatome stehen; und
eine Epoxidverbindung (D).

2. Harzzusammensetzung gemäß Anspruch 1, wobei in der Formel (1) $R^{B1}$ für eine Alkylengruppe mit 2 oder 3 Kohlenstoffatomen steht und $R^{B2}$ für eine Tetramethylengruppe steht.

3. Harzzusammensetzung gemäß Anspruch 2, wobei in der Formel (1) $R^{B1}$ für eine Ethylengruppe steht und $R^{B2}$ für eine Tetramethylengruppe steht.

4. Harzzusammensetzung gemäß Anspruch 2, wobei in der Formel (1) $R^{B1}$ für eine Propylengruppe steht und $R^{B2}$ für eine Tetramethylengruppe steht.

5. Harzzusammensetzung gemäß einem der Ansprüche 1 bis 4, wobei der Anteil an verbliebenem Antioxidationsmittel (C) in einem Formgegenstand (I), erhalten durch Formen der Harzzusammensetzung, in Bezug auf die Menge des Antioxidationsmittels (C) in der Harzzusammensetzung, 60% oder mehr beträgt.

6. Harzzusammensetzung gemäß einem der Ansprüche 1 bis 5, wobei der Anteil an verbliebenem Antioxidationsmittel (C) in einem Formgegenstand (II), erhalten durch Formen der Harzzusammensetzung, nachdem die Harzzusammensetzung für 20 Minuten in einer Formmaschine bei 350°C gehalten wurde, in Bezug auf die Menge des Antioxidationsmittels (C) in der Harzzusammensetzung, 50% oder mehr beträgt.

7. Harzzusammensetzung gemäß Anspruch 6, wobei, wenn ein YI-Wert des Formgegenstands (II) mit einer Dicke von 3,2 mm, der mit einem Spektrophotometer mit einer C-Lichtquelle und einem 2-Grad-Sichtfelds bestimmt wird, durch $YI_2$ dargestellt wird, und ein YI-Wert nach dem Erwärmen des Formgegenstands (II) für 200 Stunden bei 85°C durch $YI_3$ dargestellt wird, $\Delta(YI_3-YI_2)$ 0,10 oder weniger beträgt.

8. Harzzusammensetzung gemäß einem der Ansprüche 1 bis 7, wobei in der Formel (2) $R^{C1}$ und $R^{C3}$ jeweils für eine *tert*-Butylgruppe stehen und $R^{C2}$, $R^{C4}$ und $R^{C5}$ jeweils für ein Wasserstoffatom stehen.

9. Harzzusammensetzung gemäß einem der Ansprüche 1 bis 8, wobei die Epoxidverbindung (D) eine cyclische Epoxidverbindung umfasst.

10. Harzzusammensetzung gemäß einem der Ansprüche 1 bis 9, wobei der Gehalt der Polyetherverbindung (B), bezogen auf 100 Massenteile des Polycarbonatharzes (A), 0,1 Massenteile bis 2,0 Massenteile beträgt.

11. Harzzusammensetzung gemäß einem der Ansprüche 3 bis 9, wobei der Gehalt der Polyetherverbindung (B), bezogen auf 100 Massenteile des Polycarbonatharzes (A), 0,1 Massenteile bis 1,3 Massenteile beträgt.

12. Harzzusammensetzung gemäß einem der Ansprüche 4 bis 9, wobei der Gehalt der Polyetherverbindung (B), bezogen auf 100 Massenteile des Polycarbonatharzes (A), 0,1 Massenteile bis 0,9 Massenteile beträgt.

**13.** Harzzusammensetzung gemäß einem der Ansprüche 1 bis 12, wobei der Gehalt des Antioxidationsmittels (C), bezogen auf 100 Masseteile des Polycarbonatharzes (A), 0,001 Masseteile bis 0,4 Masseteile beträgt.

**14.** Harzzusammensetzung gemäß einem der Ansprüche 1 bis 13, wobei der Gehalt der Epoxidverbindung (D), bezogen auf 100 Masseteile des Polycarbonatharzes (A), 0,001 Masseteile bis 0,5 Masseteile beträgt.

**15.** Harzzusammensetzung gemäß einem der Ansprüche 1 bis 14, wobei das Polycarbonatharz (A) ein viskositätsgemitteltes Molekulargewicht von 10.000 bis 14.200 aufweist,
wobei das viskositätsgemittelte Molekulargewicht wie in der Beschreibung angegeben bestimmt wird.

**16.** Formgegenstand, der die Harzzusammensetzung gemäß einem der Ansprüche 1 bis 15 umfasst.

**17.** Formgegenstand gemäß Anspruch 16, wobei der Formgegenstand eine lichtleitende Platte umfasst.

**Revendications**

**1.** Composition de résine polycarbonate, comprenant :

une résine polycarbonate (A) ;
un composé polyéther (B) représenté par la formule (1) suivante :

$$R^{B3}O-(R^{B1}O)_m(RB^2O)_n-RB^4 \qquad (1)$$

dans laquelle $R^{B1}$ et $R^{B2}$ représentent chacun un groupe alkylène ayant de 2 à 6 atomes de carbone, "m"+"n" représente 5 ou plus et moins que 300, lorsque "m" représente 2 ou plus, $R^{B1}$s peuvent être identiques ou différents les uns des autres, et lorsque "n" représente 2 ou plues, $R^{B2}$s peuvent être identiques ou différents les uns des autres, à condition que tous les $R^{B1}$ et $R^{B2}$ ne soient pas identiques les uns par rapport aux autres, et $R^{B3}$ et $R^{B4}$ représentent chacun un atome d'hydrogène, un groupe hydrocarboné ayant de 1 à 30 atomes de carbone, un groupe alkanoyle ayant de 1 à 30 atomes de carbone, un groupe alkénoyle ayant de 2 à 30 atomes de carbone, ou un groupe glycidyle, et $R^{B3}$ et $R^{B4}$ peuvent être identiques ou différents les uns des autres ;
un antioxydant (C) représenté par la formule (2) suivante :

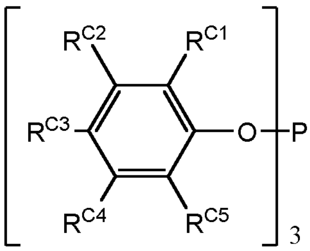
(2)

dans laquelle

dans la formule (2), $R^{C1}$ à $R^{C5}$ représentent chacun indépendamment un atome d'hydrogène, un groupe alkyle ayant de 1 à 12 atomes de carbone, ou un groupe aryle ayant de 6 à 14 atomes de carbone, à condition que $R^{C1}$ à $R^{C5}$ ne représentent pas tous des atomes d'hydrogène ; et
un composé époxy (D).

**2.** La composition de résine selon la revendication 1, dans laquelle, dans la formule (1), $R^{B1}$ représente un groupe alkylène ayant 2 ou 3 atomes de carbone, et $R^{B2}$ représente un groupe tétraméthylene.

**3.** La composition de résine selon la revendication 2, dans laquelle, dans la formule (1), $R^{B1}$ représente un groupe éthylène, et $R^{B2}$ représente un groupe tétraméthylene.

**4.** La composition de résine selon la revendication 2, dans laquelle, dans la formule (1), $R^{B1}$ représente un groupe propylène, et $R^{B2}$ représente un groupe tétraméthylene.

**5.** La composition de résine selon l'une quelconque des revendications 1 à 4, dans laquelle un rapport restant de l'antioxydant (C) dans un article moulé (I) obtenu en moulant la composition de résine par rapport à une quantité de l'antioxydant (C) dans la composition de résine est de 60% ou plus.

**6.** La composition de résine selon l'une quelconque des revendications 1 à 5, dans laquelle un rapport restant de l'antioxydant (C) dans un article moulé (II) obtenu en moulant la composition de résine après que la composition de résine a été retenue dans une machine de moulage à 350°C pendant 20 minutes par rapport à une quantité de l'antioxydant (C) dans la composition de résine est de 50% ou plus.

**7.** La composition de résine selon la revendication 6, dans laquelle, lorsqu'une valeur de jaunissement (YI) de l'article moulé (II) ayant une épaisseur de3,2 mm, qui est mesurée avec un spectrophotomètre dans des conditions d'une source de lumière C et une vue de champ à deux degrés, est représentée par $YI_2$, et une valeur de YI après que l'article moulé (II) a été chauffé à 85°C pendant 200 heures est représentée par $YI_3$, $\Delta(YI_3\text{-}YI_2)$ est 0,10 ou moins.

**8.** La composition de résine selon l'une quelconque des revendications 1 à 7, dans laquelle, dans la formule (2), $R^{C1}$ et $R^{C3}$ représentent chacun un groupe tert-butyle, et $R^{C2}$, $R^{C4}$, et $R^{C5}$ représentent chacun un atome d'hydrogène.

**9.** La composition de résine selon l'une quelconque des revendications 1 à 8, dans laquelle le composé époxy (D) comprend un composé époxy cyclique.

**10.** La composition de résine selon l'une quelconque des revendications 1 à 9, dans laquelle une teneur du composé polyéther (B) par rapport à 100 parties en masse de la résine polycarbonate (A) est de 0,1 partie en masse à 2,0 parties en masse.

**11.** La composition de résine selon l'une quelconque des revendications 3 à 9, dans laquelle une teneur du composé polyéther (B) par rapport à 100 parties en masse de la résine polycarbonate (A) est de 0,1 partie en masse à 1,3 parties en masse.

**12.** La composition de résine selon l'une quelconque des revendications 4 à 9, dans laquelle une teneur du composé polyéther (B) par rapport à 100 parties en masse de la résine polycarbonate (A) est de 0,1 partie en masse à 0,9 partie en masse.

**13.** La composition de résine selon l'une quelconque des revendications 1 à 12, dans laquelle une teneur de l'antioxydant (C) par rapport à 100 parties en masse de la résine polycarbonate (A) est de 0,001 partie en masse à 0,4 partie en masse.

**14.** La composition de résine selon l'une quelconque des revendications 1 à 13, dans laquelle une teneur du composé époxy (D) par rapport à 100 parties en masse de la résine polycarbonate (A) est de 0,001 partie en masse à 0,5 partie en masse.

**15.** La composition de résine selon l'une quelconque des revendications 1 à 14, dans laquelle la résine polycarbonate (A) a un poids moléculaire moyen en viscosité de 10000 à 14200,
dans laquelle le poids moléculaire moyen en viscosité a été calculé à partir de l'équation de Schnell suivante après la détermination d'une viscosité limitante [η] par la mesure de la viscosité d'une solution de chlorure de méthylène, concentration : g/l, à 20°C avec un viscosimètre de type Ubbelohde :

$$[\eta] = 1.23 \times 10^{-5} \times Mv^{0.83}.$$

**16.** Article moulé, comprenant la composition de résine de l'une quelconque des revendications 1 à 15.

**17.** L'article moulé selon la revendication 16, dans lequel l'article moulé comprend une plaque de guidage de lumière.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004051700 A
- JP 2015180709 A
- JP 2016125028 A
- WO 2011083635 A1
- JP 5801516 B
- US 20170275422 A1